# EUROPEAN PATENT APPLICATION

(11) **EP 1 065 099 A2**
(43) Date of publication of application: **03.01.2001**
(21) Application number: 00305412.9
(22) Date of filing: 28.06.2000
(51) Int. Cl.: B60P 1/02

(54) **Trailers**

(30) Priority: 30.06.1999 GB 9915114
(71) Applicant: Benton, Michael Owen James, Poole, Dorset, BH16 6AL (GB)
(72) Inventor: Benton, Michael Owen James, Poole, Dorset, BH16 6AL (GB)
(74) Representative: Targett, Kenneth Stanley

(57) **Abstract**

A trailer (10) has a chassis and at least one pair of wheels (60) on which the chassis can be run along the ground. A mechanism (44,52,54) connects the chassis to the wheels for movement between a raised position in which the chassis is supported by the wheels with substantial ground clearance and a lowered position in which the chassis rests on the ground. Hydraulic rams (48) can be operated by a user to raise the chassis from the lowered position to the raised position.

The trailer facilitates loading and unloading, or, in the case where a caravan body or horse box (or the like) is built onto the trailer, access and egress by people/animals.

## Description

This invention relates to trailers, including (but not limited to) caravans, boat trailers, animal carrying trailers (such as horse boxes), trailers for carrying cars or motorcycles and general purpose trailers such as flat bed trailers, box trailers and tipper trailers.

The invention is more particularly concerned with facilitating access and egress of people or animals to/from caravans or animal carrying trailers or facilitating loading and unloading of other sorts of trailers.

The chassis of a trailer does, of course, need to be above ground level to provide the required ground clearance when the trailer is being towed. However, in the case of a caravan, for example, this means that a large upward step needs to be taken (typically about 500 mm) in order to get into the caravan, often difficult for the infirm or disabled. A set of steps or a steep or long ramp could be placed on the ground outside the caravan door. Especially if the ground is uneven or unstable, sets of steps can lead to accidents. Long ramps take up room and steep ramps lead to accidents. In the case of other trailers, a great deal of effort and high ramps may be required in order to load and unload them.

Patent document EP-A-0683089 describes a trailer comprising: a main chassis portion for supporting a load; a chassis nose portion projecting forwardly from the main portion for coupling the trailer to a towing vehicle; at least one pair of wheels; a mechanism connecting the main chassis portion to the wheels for movement between (a) a raised position in which the wheels are disposed part-way along the length of the main chassis portion and the chassis is supported by with substantial ground clearance and (b) a lowered position in which the wheels remain disposed part-way along the length of the main chassis portion but are raised relative thereto; and means operable by a user to raise the chassis from the lowered position to the raised position.

The chassis nose portion of the trailer of EP-A-0683089 is rigid with the main chassis portion. Problems with this are that, in order to lower the chassis, it is first necessary to uncouple it from the towing vehicle, and, once lowered, the chassis cannot be re-coupled to the towing vehicle.

The trailer of the present invention is characterised by: the nose portion being connected to the main portion for pivotal movement about a transverse axis of the trailer between a position in which the nose portion is generally aligned with the main portion and a position in which the nose portion is inclined upwardly from the pivot axis; and means operable by a user to move the nose portion from the inclined position to the aligned position; so that, when the main chassis portion is in the lowered position relative to the wheels and the chassis nose portion is in the inclined position relative to the main chassis portion, the main chassis portion can rest on the ground or be supported by the wheels without substantial ground clearance, while the chassis nose portion can be, or remain, coupled to the towing vehicle.

Advantages of the invention are:-
- when the trailer is not being towed, the chassis can be lowered so that it is on or close to the ground. In the case of a caravan, the height of the step up into the caravan need not be more than the combined thickness of the chassis and floor, perhaps about 100 or 150 mm. In the case of other trailers, the load can more easily be rolled, slid or (in the case of a vehicle) driven onto the trailer without the need for high ramps;
- it is unnecessary to uncouple the trailer from the towing vehicle before the chassis can be completely lowered, which is a particular advantage to disabled persons; and
- the trailer can remain coupled to the towing vehicle once it has been lowered. Motor vehicle security systems have become highly advanced and are commonplace, but are also expensive. Similar systems can be fitted to trailers, such as caravans, but at considerable extra expense. On the other hand, lockable towing hitches are relatively cheap, and so the ability to lock the trailer to the towing vehicle while the trailer is lowered can be used as a theft deterrent.

In some cases, the raising means and the means for moving the nose portion are preferably commonly operable by the user. For example, in the case of a caravan, there is unlikely to be a need to lower the chassis relative to the wheels without also inclining the nose portion upwardly, and so common operation leads to simpler operation and construction. In other cases, the raising means and the means for moving the nose portion are independently operable by the user. For example, in the case of a boat trailer, it may be desirable to be able lower the chassis relative to the wheels while keeping the nose portion in its aligned position so that the rear end of the trailer is lowered further. This may be advantageous when launching or recovering a boat from a slipway.

Preferably, for safety's sake, the trailer includes a locking device for locking the chassis in the raised position.

Preferably, the mechanism is mounted on the wheels to permit rotation of the wheels about their axes, and the chassis is mounted on the mechanism to permit pivoting of the mechanism about a pivot axis parallel to the wheel axes. This can provide a compact arrangement.

A separate such mechanism may provided for each of the wheels. In this case, each mechanism preferably comprises a crank pivotally mounted on the chassis about the pivot axis, a torsion suspension unit mounted on the crank, and a radius arm extending from the torsion unit. Each wheel is rotatably mounted on the respective radius arm, and the raising means acts on each crank. Again, this can provide a compact arrangement. In this case, the raising means preferably includes, for each mechanism, a respective hydraulic ram acting on the respective crank.

The chassis may have a generally planar upper surface on which a trailer body (such as a caravan body, box or flat bed) can be supported, and in this case the mechanism is preferably arranged so that it does not protrude substantially above the plane of the upper surface of the chassis. In the case where hydraulic rams are employed, they preferably also do not protrude substantially above the plane of the upper surface of the chassis. Accordingly, the mechanism and hydraulic rams do not restrict the floor or bed area of the trailer.

In an embodiment of the invention, the chassis comprises a main portion to which the mechanism is connected and a nose portion projecting forwardly from the main portion. A towing hitch (and optionally a jockey wheel) is mounted on the nose portion and the nose portion is connected to the main portion for pivotal movement about a transverse axis of the trailer between a position in which the nose portion is generally aligned with the main portion and a position in which the nose portion is inclined upwardly from the pivot axis. Means operable by a user are provided to move the nose portion from the inclined position to the aligned position. This enables the chassis to be lowered to the ground without the need for the towing hitch to be uncoupled from the towing vehicle or the need to raise the jockey wheel above the level of the underside of the chassis. In the case where a lockable towing hitch is employed, locking the trailer to a locked towing vehicle can be a theft deterrent.

A specific embodiment of the present invention will now be described, purely by way of example, with reference to the accompanying drawings, in which:

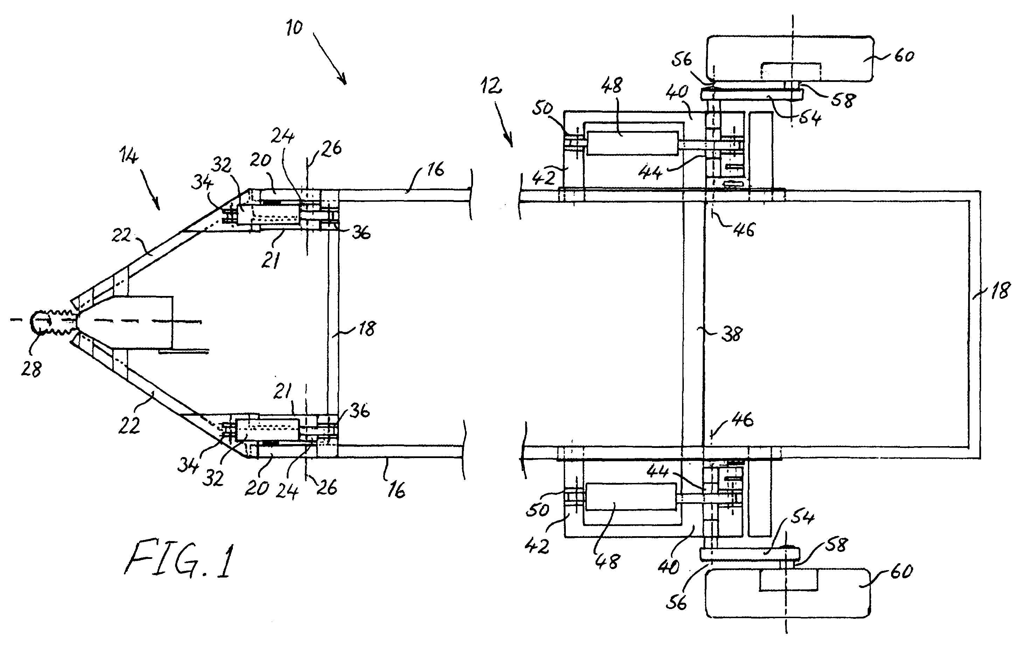

- Figure 1: is a plan view, partly cut away, of a trailer with its chassis raised relative to its wheels and with a nose portion of its chassis aligned relative to a main portion of the chassis;
- Figure 2: is a side elevation of the trailer in the same configuration as Figure 1;
- Figure 3: is similar to Figure 2, but with the chassis lowered relative to the wheels and with the nose portion inclined upwardly relative to the main portion of the chassis; and
- Figure 4: is similar to Figure 2, but with the chassis lowered relative to the wheels while the nose portion remains aligned relative to the main portion of the chassis.

Referring to the drawings, a trailer 10 has a welded steel chassis with a main portion 12 and a nose portion 14. The main chassis portion 12 has a pair of longitudinal members 16 and a pair of cross members 18 arranged as a generally rectangular frame. The longitudinal members 16 have portions 20 that project slightly forwardly of the front cross member 18. Parallel to and spaced from each of the portions 20, an associated stub 21 projects forwardly from the front cross member 18.

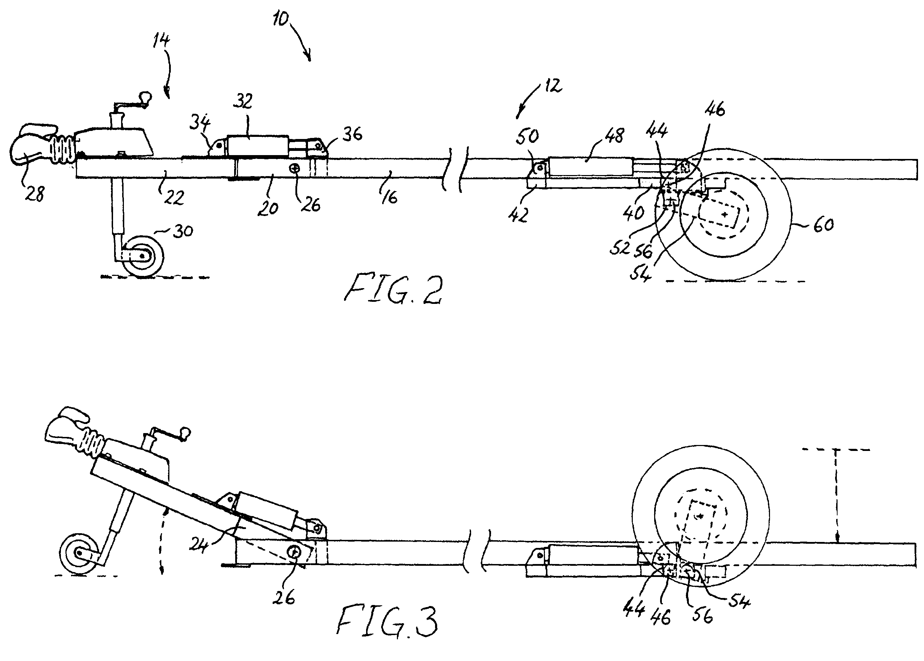

The nose chassis portion 14 has a pair of main members 22 arranged in a forwardly pointing V-shape. From the distal ends of the main nose members 22, a pair of mutually parallel members 24 project rearwardly each between a respective one of the forwardly projecting portions 20 of the longitudinal members and its associated stub 21 and are hinged thereto about a transverse axis 26 for pivotal movement between a position as shown in Figure 2 in which the nose chassis portion 14 is aligned with the main chassis portion 12 and a position as shown in Figure 3 in which the nose chassis portion 14 is inclined upwardly with respect to the main chassis portion 12.

The nose chassis portion 14 is fitted with a conventional auto-braking towing hitch 28 and a vertically adjustable jockey wheel 30.

A respective hydraulic ram 32 is positioned above each of the parallel members 24 of the nose chassis portion and acts between a trunnion 34 on the nose chassis portion 14 and a trunnion 36 on the main chassis portion 12. Thus, when the rams 32 are expanded, the nose and main chassis portions 12,14 can be forced to the aligned configuration of Figure 2, and a locking device (not shown) can then be operated to lock the chassis portions 12,14 in that configuration. When the locking device is unlocked, the rams 32 can be allowed to contract and the front of the main chassis portion 12 will sink so that the nose and main chassis portions 12,14 assume the inclined configuration shown in Figure 3.

The main chassis portion 12 also has an intermediate cross member 38, the ends of which provide stubs 40 which project transversely beyond the longitudinal members 16 of the main chassis portion 12. Further stubs 42 are also provided which project transversely outwardly from the longitudinal chassis members 16 at positions forwardly of the stubs 40. On each of the stubs 40, a crank 44 is mounted for pivotal movement about a transverse axis 46. Each crank 44 provides an arm (or a pair of arms) on which a rearward end of a respective hydraulic ram 48 acts, and the forward ends of the rams 48 act on respective trunnions 50 on the forward stubs 42. On each of the cranks 44, a respective torsion suspension unit 52 is mounted. Each torsion unit 52 provides a mounting for a respective radius arm 54 for sprung and damped pivotal movement about an axis 56. At the distal end of each radius arm 54, a respective stub axle 58 projects transversely outwardly and is journalled to a respective brakeable road wheel 60. Thus, when the rams 48 are in an expanded state, as shown in Figure 2, the radius arms 54 project rearwardly and slightly downwardly, with the main chassis portion 12 being raised above the ground, and locking devices (not shown) can be engaged to lock the cranks 44 in that configuration. When the locking devices are unlocked, the rams 48 can be allowed to contract, the cranks 44 and radius arms 54 pivot about a quarter-turn anticlockwise, as viewed in Figures 2 and 3, and the main chassis portion 12 will sink to the ground, as shown in Figure 3. Subsequent charging of the rams 48 to expand them causes the cranks 44 and radius arms 54 to pivot about a quarter-turn clockwise, as viewed in Figures 2 and 3, and so the main chassis portion 12 is raised back to the Figure 2 position, whereupon the locking devices can then be engaged.

Various bodies may be built onto the trailer 10, such as a caravan body, a horse box, boat supports, an open box, or simple flat bed. In this connection, it should be noted from Figures 2 and 3 that the only parts of the mechanisms which connect and operate the wheels 60 and which are ever above the plane containing the upper surfaces of the longitudinal members 16 and cross members 18 of the chassis are the radius arms 54 and stub axles 58 for the wheels 60. This therefore enables a simple flat floor or bed of the trailer to be mounted directly onto these chassis members 16,18 and to extend over the stubs 40,42, the wheel rams 48, and the cranks 44. In the case of a caravan body or horse box, it may be formed with wheel arches to accommodate the wheels 60 and radius arms 54, whether the trailer is raised or lowered. In the case of other types of trailer, mudguards may be provided which are pivotally movable between a normal position relative to the wheels when the trailer is being towed, and a position outboard of the normal position when chassis is to be lowered.

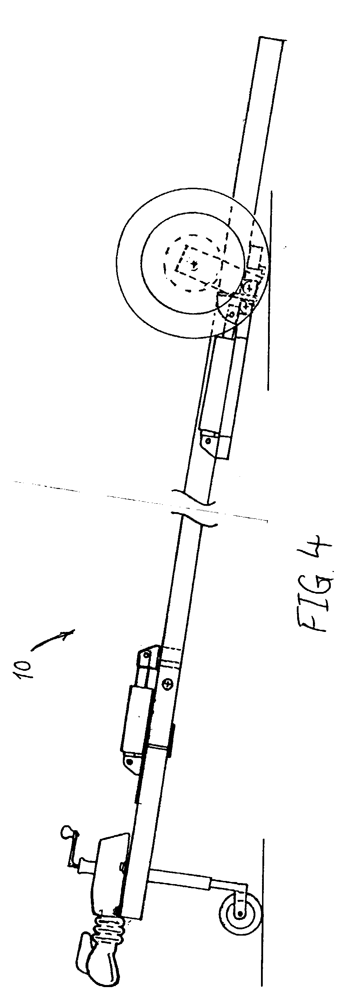

The nose and wheel rams 32, 48 may be operated by a manual pump and release valve, but preferably are operated by a 12 V electric pump and release valve. A commonly controlled hydraulic circuit may be provided for all of the rams 32,48, so that, when the wheel rams 48 move the main chassis portion 12 from the lowered position to the raised position, the nose rams 32 move the nose portion from the inclined position to the aligned position, and *vice versa*. This may be suitable in the case where a caravan body is built onto the chassis, since there is unlikely to be a need in this case for the main chassis portion to be raised and the nose to be inclined, or *vice versa*. Alternatively, separately controllable hydraulic circuits may be provided for the nose rams 32 and the wheel rains 48, so that, for example, the wheel rams 48 may be moved to the lowered position while the nose rams 32 maintain the aligned position, as shown in Figure 4. This may be suitable in the case where a boat trailer is built onto the chassis, since the whole trailer can then be inclined downwardly towards the rear to assist in launching a boat from the rear of the trailer or recovering a boat onto the trailer. In a further modification which may be suitable for a boat trailer and other types of trailer, the facility to pivot the nose chassis portion 14 with respect to the main chassis portion 12 may be omitted.

Other ways of operating the trailer may be used. For example, the hydraulic rams 32 and/or 48 may be replaced by screw jacks, which again may be manually operable or driven by 12 V electric motors.

Although a pair of nose rams 32 (or other nose actuators) have been described above, a single actuator may be employed. Also, although a pair of wheel rams 48 (or other wheel actuators) have been described above, a single actuator may be employed and the cranks 44 may be mechanically linked to operate in unison.

Although a single, non-steering axle trailer has been described above, it will be appreciated that the invention is also applicable to plural axle trailers, with or without one of the axles being steerable.

Referring to Figure 2, it will be appreciated that, in the case where a caravan body is built onto the main chassis portion 12, the height of the caravan floor above the ground will, when the chassis is completely lowered, be about equal to the sum of the height of the main chassis members 16,18 (say 100 mm) and the thickness of the floor (say 25 mm). Although this will not present any great obstacle to many people, it will still present difficulties to wheelchair users. To deal with this, the chassis member 16,18 adjacent the caravan door, together with the caravan floor, may be indented, and a ramp may be fitted in the indent for hinged movement between a raised position in which the upper surfaces of the ramp and the caravan floor are flush, and a lowered position in which the ramp is inclined outwardly and downwardly from the caravan floor to the ground. A reversible drive mechanism may be provided which not only lowers and raises the ramp, but also opens and closes the caravan door, and optionally also unlatches the door before it is opened.

It should be noted that the embodiment of the invention and a number of modifications thereto have been described above purely by way of example and that many other modifications and developments may be made thereto within the scope of the present invention.

## Claims

1. A trailer (10) comprising:
a main chassis portion (12) for supporting a load;
a chassis nose portion (14) projecting forwardly from the main portion for coupling the trailer to a towing vehicle;
at least one pair of wheels (60);
a mechanism (42,52,54) connecting the main chassis portion to the wheels for movement between (a) a raised position in which the wheels are disposed part-way along the length of the main chassis portion and the chassis is supported by with substantial ground clearance and (b) a lowered position in which the wheels remain disposed part-way along the length of the main chassis portion but are raised relative thereto; and
means (48) operable by a user to raise the chassis from the lowered position to the raised position;
characterised by:
the nose portion being connected to the main portion for pivotal movement about a transverse axis (26) of the trailer between a position in which the nose portion is generally aligned with the main portion and a position in which the nose portion is inclined upwardly from the pivot axis; and
means (32) operable by a user to move the nose portion from the inclined position to the aligned position;
so that, when the main chassis portion is in the lowered position relative to the wheels and the chassis nose portion is in the inclined position relative to the main chassis portion, the main chassis portion can rest on the ground or be supported by the wheels without substantial ground clearance, while the chassis nose portion can be, or remain, coupled to the towing vehicle.

2. A trailer as claimed in claim 1, and including a towing hitch (28) mounted on the nose portion for coupling the trailer to the towing vehicle.

3. A trailer as claimed in claim 1 or 2, wherein the raising means and the means for moving the nose portion are commonly operable by the user.

4. A trailer as claimed in claim 1 or 2, wherein the raising means and the means for moving the nose portion are independently operable by the user.

5. A trailer as claimed in any preceding claim, further including a locking device for locking the main chassis portion in the raised position.

6. A trailer as claimed in any preceding claim, wherein the mechanism is mounted on the wheels to permit rotation of the wheels about their axes, and the chassis is mounted on the mechanism to permit pivoting of the mechanism about a pivot axis (56) parallel to the wheel axes.

7. A trailer as claimed in claim 6, where a separate such mechanism is provided for each of the wheels.

8. A trailer as claimed in claim 7, wherein:
each mechanism comprises a crank (44) pivotally mounted on the chassis about the pivot axis, a torsion suspension unit (52) mounted on the crank, and a radius arm (54) extending from the torsion unit;
each wheel is rotatably mounted on the respective radius arm; and
the raising means acts on each crank.

9. A trailer as claimed in claim 8, wherein the raising means includes, for each mechanism, a respective hydraulic ram (48) acting on the respective crank.

10. A trailer as claimed in any preceding claim, wherein:
the chassis has a generally planar upper surface on which a trailer body can be supported; and
the mechanism does not protrude substantially above the plane of the upper surface of the chassis.

11. A trailer as claimed in claim 10 when dependent on claim 9, wherein the hydraulic rams do not protrude substantially above the plane of the upper surface of the chassis.
